# EUROPEAN PATENT APPLICATION

(11) **EP 3 387 893 A1**
(43) Date of publication of application: **17.10.2018**
(21) Application number: 16875816.7
(22) Date of filing: 16.12.2016
(51) Int. Cl.: A01G 1/00

(54) **KIT FOR PRODUCING PLANT GROWTH MEDIUM, METHOD FOR PRODUCING PLANT GROWTH MEDIUM, AND METHOD FOR RECYCLING USED PLANT GROWTH MEDIUM**

(30) Priority: 16.12.2015 JP 2015245436; 16.12.2015 JP 2015245437
(71) Applicant: Plantio, Inc., Minato-ku, Tokyo 108-0073 (JP)
(72) Inventor: SERIZAWA, Takayoshi, Tokyo 108-0073 (JP)
(74) Representative: Ström & Gulliksson AB
(86) International application number: PCT/JP2016/087678
(87) International publication number: WO 2017/104842

(57) **Abstract**

The purpose of the present invention is to establish a technology that enables individuals who do not have any special knowledge regarding soil to easily obtain soil that is rich in microorganisms in good balance and is suited to growing plants. This kit for producing a plant growth medium is provided with a base medium 1 comprising organic matter and a microorganism-containing capsule 2 serving as a packaging container comprising microorganisms. The plant growth medium 3 is produced by adding the microorganisms included in the microorganism-containing capsule 2 to the base medium 1.

## Description

### TECHNICAL FIELD

The present invention relates to a kit for producing a plant growth medium, a method for producing a plant growth medium, and a method for recycling a used plant growth medium.

### BACKGROUND ART

Conventionally, too much use of chemical fertilizers or synthetic agricultural chemicals in the soil has disrupted the balance of microorganisms in the soil, resulting in an increase in problems such as the soil becoming infertile, causing repeated cultivation failure, and lowered resistance of plants to pathogenic bacteria or the like.

In recent years, cultivation methods using a soil improvement additive or an agricultural chemical using a microorganism have become widely used. For example, plant disease control agents using lactobacilli (see Patent Document 1) and plant disease control agents using actinomycetes (see Patent Document 2) have been proposed.

Patent Document 1: Japanese Patent No. 5272154
Patent Document 2: Japanese Unexamined Patent Application, Publication No. 2005-295924

### DISCLOSURE OF THE INVENTION

### Problems to be Solved by the Invention

However, it has been pointed out that soil improvement using microorganisms lacks in the stability of quality or quantity of components which become nutrients for plants compared to cases where chemical fertilizers are used. One reason for this is that it is very difficult to maintain a state that is rich in microorganisms in good balance in the soil for a long period of time.

In recent years, there has been a growing demand for soil formation that does not rely on chemical fertilizers even in home gardens, and microbial fertilizers are often used. It is, however, difficult for individuals who have poor knowledge regarding the soil to control the state of microorganisms in the soil. As a result, there are many cases where it is not possible to obtain a soil suitable for plant growth, resulting in poor plant growth and cultivation is abandoned.

The present invention has been made under these circumstances and the purpose of the present invention is to establish a technology that enables individuals who do not have any special knowledge regarding soil to easily obtain soil that is suited to growing plants.

### Means for Solving the Problems

In order to achieve the above purpose, the kit for producing a plant growth medium according to an aspect of the present invention comprises: a base medium comprising organic matter and a microorganism wherein the plant growth medium is produced by adding the microorganism to the base medium.

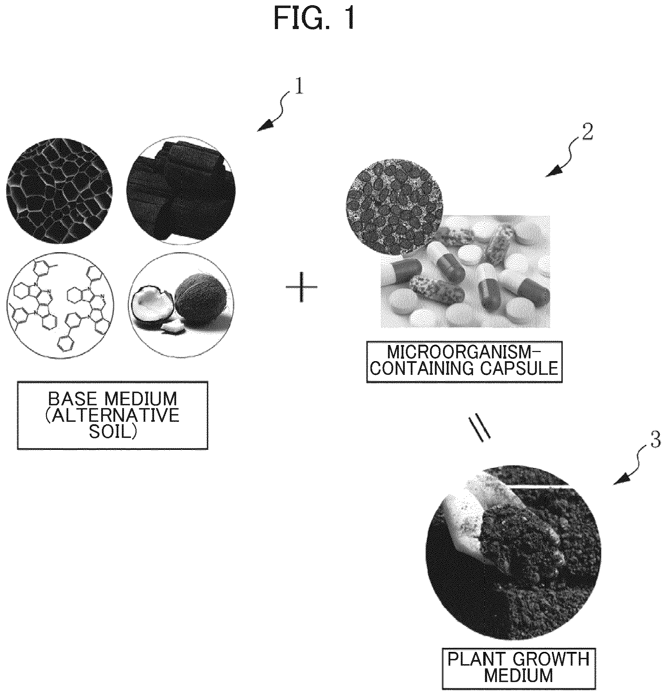

Here, the microorganism may be contained in a predetermined packaging container (e.g., the microorganism-containing capsule 2 of Figure 1).

In addition, the base medium and the microorganism may be configured so that a plant growth medium having an indicating value serving as an indicator of 'good soil' within a predetermined range can be produced.

The method for producing a plant growth medium of an aspect of the present invention is a method comprising: providing a kit for producing a plant growth medium comprising a base medium comprising organic matter and a microorganism, wherein a plant growth medium in an unused state is produced by adding the microorganism to the base medium.

In addition, the method for recycling a used plant growth medium of an aspect of the present invention comprises the steps of: conducting heat treatment by heating a used plant growth medium to at least kill or diminish a soil organism, so as to extinguish biological properties, wherein the used plant growth medium is a medium resulting from use of a plant growth medium in an unused state produced by the method for producing a plant growth medium in order to grow a predetermined plant, compensating an amount of decrease by adding the base medium to the plant growth medium, and restoring the plant growth medium to a plant growth medium in an unused state by recovering the biological properties lost by the heat treatment by adding a microorganism to the plant growth medium, so as to recycle the used plant growth medium. Effects of the Invention

A technology can be established to enable individuals who do not have any special knowledge regarding soil to easily obtain soil that is suited to growing plants. In addition, a technology can be established to enable individuals who do not have any special knowledge regarding soil to easily reuse soil used for growing plants.

### BRIEF DESCRIPTION OF THE DRAWINGS

Figure 1 is a drawing showing the kit for producing a plant growth medium 3 according to an embodiment of the present invention;
Figure 2 illustrates the mechanism of production of plant growth medium 3 according to an embodiment of the present invention;
Figure 3 illustrates the action of microorganisms and their contribution to plants during the production process of plant growth medium according to an embodiment of the present invention;
Figure 4 is a cross-sectional view of the plant growth medium when a cover soil according to an embodiment of the present invention is used; and
Figure 5 is a diagram illustrating a use cycle of the plant growth medium according to an embodiment of the present invention.

### PREFERRED MODE FOR CARRYING OUT THE INVENTION

The following describes embodiments of the present invention relating to the kit for producing a plant growth medium according to the present invention, the method for producing a plant growth medium, and the method for recycling a used plant growth medium.

Figure 1 is a diagram illustrating the kit for producing a plant growth medium 3 according to an embodiment of the present invention. Here, the kit refers to a set of components used to produce plant growth medium 3. The kit comprises base medium 1 as a material containing organic matter that is a source of plant growth medium 3 and capsule 2 as a packaging container containing a microorganism. As shown in Figure 1, plant growth medium 3 is produced by adding microorganisms included in microorganism-containing capsule 2 serving as a packaging container to base medium 1.

Plant growth medium 3 produced in this manner is a 'good soil'. 'Good soil' is a soil in which a variety of organisms are active. Whether or not a soil is a 'good soil' can be assessed by an indicating value serving as an indicator of 'good soil'. The 'indicating value' in this context refers to a numerical value obtained by quantifying the degree of soil suitability for plant growth. For example, a 'microbial diversity / activity value' may be used as an indicating value serving as an indicator of 'good soil'. More specific examples of possible indicators are given below. Based on this indicator, for example, soils polluted by chemical abuse or soils impoverished by continuous cropping do not constitute a 'good soil'. On the other hand, on the basis of this indicator, for example, a rich soil suitable for crops, created by farmers on their own by trial and error, will constitute a 'good soil'.

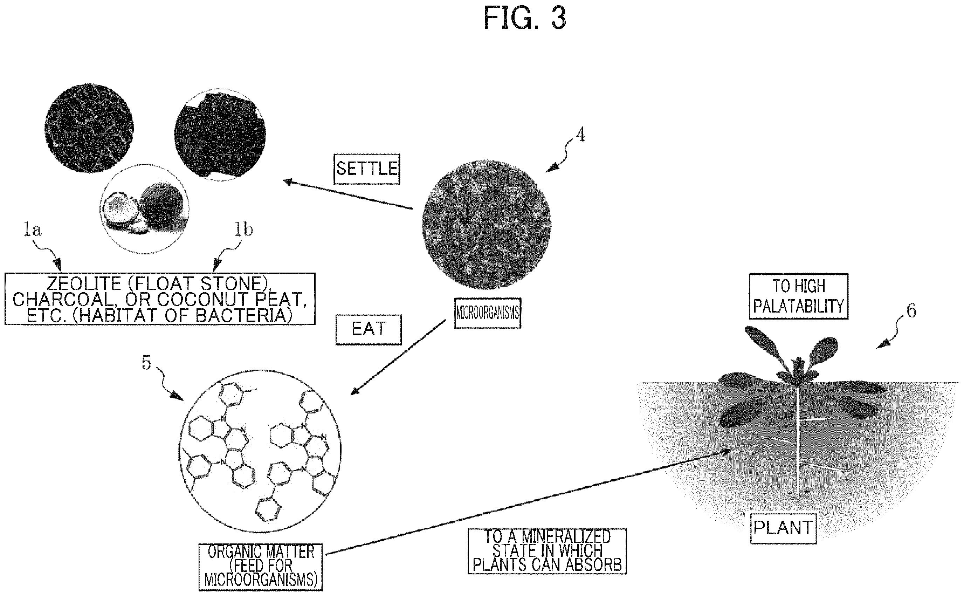

Materials that can be used as the base medium 1 are not particularly limited so far as they are constituted from organic matters. While the most preferred material is porous, having a shape which is easy to moderately collapse, highly water-retentive, and well-drained so that microorganisms are easy to settle, a material that meets at least one of these requirements is preferred. Organic matters used in the present invention are not particularly limited so far as they have biodegradability and capability of physically remaining in the soil. For example, odorless and deodorizing charcoal is particularly suitable for indoor use. Optimal materials include, for example, zeolite (float stone) 1a and coconut peat 1b, etc. shown in Figure 3 below, and peat, grass peat, wood charcoal, and other charcoals. Base medium 1 may be produced by a method of artificially attaching and processing zeolite 1a to coconut peat 1b.

Microorganism-containing capsule 2 is constituted by containing microorganisms in living state and materials necessary for holding the microorganisms in living state. As capsule containers, a same type of capsules as those for general oral drugs can be used and they may be constituted of a water-soluble material such as gelatin. Microorganisms used in the present invention are not particularly limited so far as they are effective in soil formation, and examples include bacteria such as lactobacilli and actinomycetes, as well as fungi such as yeasts, and the like. Also, the form and materials of packaging containers, such as capsules, are not particularly limited so far as they are capable of protecting microorganisms from the external environment and keeping them in a living state, but they are more preferred if they have properties of not lowering the biological activity of microorganisms or the like.

Conventionally, as soil improving agents and agricultural chemicals containing microorganisms, many kinds of those in the form of liquid or powder are distributed, but it is preferable to formulate such agents in the form of capsule because of high protection capability from external environmental and ease of handling.

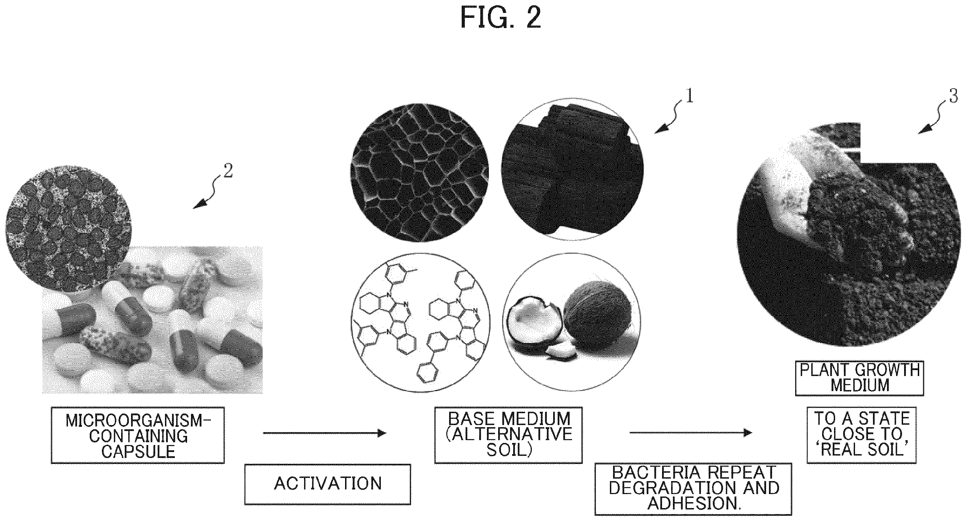

Figure 2 illustrates the mechanism of production of plant growth medium 3 according to an embodiment of the present invention. Figure 3 illustrates the action of microorganisms and their contribution to plants during the production process of the plant growth medium according to an embodiment of the present invention.

Upon adding microorganism-containing capsule 2 to base medium 1, microorganism 4 is released out of the capsule. Microorganism 4 released adheres to base medium 1 and decomposes (mineralizes) organic matter 5 constituting base medium 1.

Since plant 6, on the other hand, is unable to absorb organic matter 5, if plant 6 is planted in base medium 1 prior to the addition of microorganism-containing capsule 2, plant 6 has a low growth rate. Microorganism 4 attached to base medium 1 mineralizes organic matter 5 constituting base medium 1, and thereby plant 6 comes to be able to absorb mineralized inorganic components as nutrients.

After the addition of microorganism-containing capsule 2 to base medium 1, e.g. at several weeks later, base medium 1 changes to a state similar to fertile soil through the above-mentioned mechanism.

To determine whether or not base medium 1 has changed to a similar state to a fertile soil (degree of preference for plant growth), a method that uses a value serving as an indicator of soil conditions (hereinafter referred to as "indicating value") can be adopted. As an example, a case will be explained where a value obtained using a method for measuring crop cultivation frequency of soil disclosed in the PCT International Application, Publication No. WO2011/092860 (hereinafter this value is referred to as a "SOIL value" for convenience sake) is used as the indicating value. The SOIL value is a value indicating diversity and activity of soil microorganisms. A soil with a SOIL value within a predetermined preferred range is meant to be rich in kinds and numbers of microorganisms. Therefore, if a SOIL value of plant growth medium 3 falls within the predetermined preferred range, the plant growth medium 3 is judged to be very suitable for plant growth. A specifically preferred range for SOIL value of plant growth medium 3 according to an embodiment of the present invention is preferably 1,500,000 SOIL or more. However, the range between 1,500,000 and 2,000,000 is appropriate because above 2,000,000 SOIL, such a SOIL value is almost equivalent to SOIL values obtained by using fertilizers.

Major factors determining the SOIL value of plant growth medium 3 are the combination of base medium 1 and microorganism-containing capsule 2 as well as the mixing ratio thereof. Accordingly, in order to achieve a SOIL value within a predetermined preferred range, it is necessary to grasp what kind of microorganism-containing capsule 2 is required in what quantity, etc., and to put such microorganism-containing capsule 2 into base medium 1 at a suitable timing.

Base medium 1 and microorganism-containing capsule 2 of the kit for producing a plant growth medium are provided in a combination and a blending ratio so that the SOIL value of plant growth medium 3 after production is in a predetermined preferred range, provided that the production is performed according to an ideal growth model.

Therefore, plant growth medium 3 produced by using the kit for producing a plant growth medium in a similar manner to the ideal growth model will have a SOIL value within the predetermined preferred range and will become suitable for plant growth. In plant growth medium 3 under such a preferred state, self-purification action by microorganism 4 occurs, and fertilizers and pesticides are unnecessary for a certain period of time. The certain period is approximately 6 months. Therefore, if the period of cultivation/growth exceeds this, it is desirable to add additional microorganism-containing capsule 2 after five months, i.e., one month before the end of the period.

When plants are placed indoors, sometimes living worms/insects or eggs thereof are mixed in the soil in pots, etc., and the worms/insects are generated indoors. This can be solved by disinfecting base medium 1 or applying worm/insect repellent treatment thereto beforehand. This base medium 1 which is an alternative soil can be constituted from raw materials made of natural products that are sustainable while preserving the global environment and not harming the Earth. Base medium 1 is an artificial culture soil that can be easily handled even by individuals who are not familiar with soil and can be provided under a clean condition. Further, by conducting production by putting microorganism-containing capsule 2 containing a large quantity of organisms, which reproduce high bio-diversity, into base medium 1, it is possible to obtain plant growth medium 3 (artificial biosoil), in which a state close to that of real soil (rich and diverse in microorganisms unlike general soil, and resulting in difference in the final tastes of crops) is artificially realized. The plant growth medium 3 has a feature that it can be disposed without applying any treatment when it is unnecessary.

In general, when crops are cultivated in a soil with a diverse range of microorganisms, it is said that good-tasting crops grow because they can amply absorb numerous kinds of nutrients. Therefore, if crops are cultivated in plant growth medium 3, where the SOIL value is within a predetermined preferred range, similar effects are achieved and thereby it is possible to grow plants having high palatability. Such effect on taste of crops is as shown in Figure 3.

In this document, the method using the SOIL value as an indicating value has been described, but other values such as moisture, temperature, EC (electrical conductivity) value, pH value, contents of three elements of fertilizers (N: nitrogen, P: phosphorus, K: potassium; hereinafter referred to as "NPK"), contents of five elements of the same, contents of seven elements of the same, contents of twelve elements of the same, and contents of 17 elements of the same or the like of soil may be used as the indicating value. Especially, with regard to the three elements of fertilizers (NPK), the contents thereof are measured before a plant is grown, compared with the contents after the growth and each of the decreases is analyzed, so that the results can be used for identifying microorganisms which produce NPK. This enables an effective fertilization design.

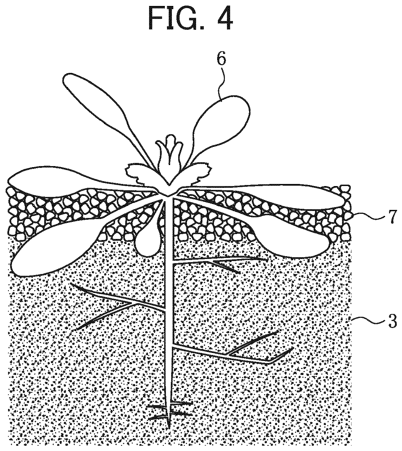

Figure 4 is a cross-sectional view of plant growth medium 3 where cover soil 7 is used, according to an embodiment of the present invention. Cover soil 7 is a material that covers the surface of plant growth medium 3 for the purpose of preventing an increase in the numbers of small worms/insects and may be included in the kit for producing a plant growth medium according to an embodiment of the present invention.

In indoor plant cultivation, an increase in the number of small worms/insects such as flies is a problem, but when agricultural chemicals are used, the biological properties of plant growth medium 3 are damaged. Since these inhabit within a zone which is 3 cm deep from the ground surface, the above problem can be solved by constructing this zone with inorganic substances having predetermined structure properties (having air permeability and water permeability and not spontaneously diffusing into the soil or not assimilating, etc.). A certain effect is obtained, even when the zone is assumed to be 1.5 cm deep from the ground surface. The biological properties refer to quantitative and qualitative richness and activities, etc. (diversity, balance) in soil microorganisms and soil organisms.

The timing of covering the surface of plant growth medium 3 with cover soil 7 is after germination in the case of photophilic plants. In the case of photophobic plants, the surface is desirably covered as soon as possible after plant growth medium 3 is charged. It is not necessarily required to wait for seeding to cover the surface. Furthermore, covering may be made at the start of the production of plant growth medium 3.

As materials for such cover soil 7, for example, crushed scallop shells and vermiculites are suitable. Vermiculite may be originally included in plant growth medium 3, and it is acceptable for a small amount of vermiculite to be mixed in plant growth medium 3. Vermiculite is also preferred in terms of ease of discrimination from seeds and pebbles in images obtained by photographing plant growth medium 3 to analyze the state of soil by AI (artificial intelligence), etc.

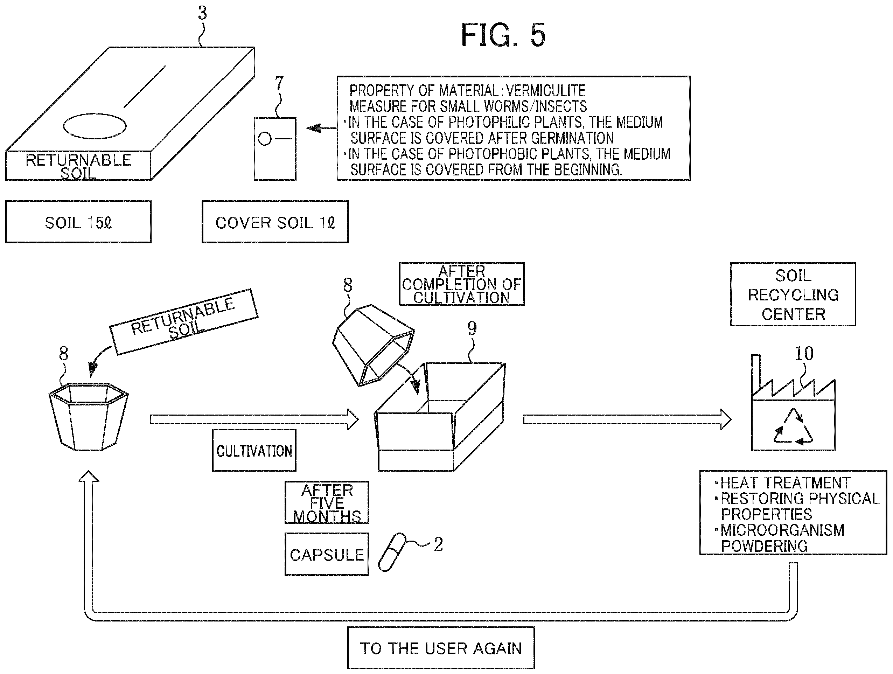

Figure 5 illustrates a use cycle of plant growth medium 3 according to an embodiment of the present invention. Users of the kit for producing a plant growth medium according to an embodiment of the present invention produce plant growth medium 3 in plant growing container 8, cover the surface with cover soil 7, and sprinkle seeds to grow plant 6.

Plant growing container 8 may be any, but desirably has a moderate water holding property, draining property and air permeability when combined with plant growth medium 3. The period during which fertilizers and pesticides are unnecessary for plant growth medium 3 is approximately 6 months after the start of cultivation and growth. Therefore, if the period exceeds this, it is desirable to add additional microorganism-containing capsule 2 after five months, i.e. one month before the end of the period.

After the growth of plant 6 on plant growth medium 3 is completed, the user sends used plant growth medium 3 to soil recycling center 10 for collection. For the collection of used plant growth medium 3, used plant growth medium-collecting container 9 is used.

As used plant growth medium-collecting container 9, any container suitable for collecting and transporting soil, such as a cardboard box, for instance, a used shipping container of the kit for producing plant growth medium 3, may be used. Soil recycling center 10 is a base for recycling plant growth medium 3 according to an embodiment of the present invention. It restores the SOIL value of plant growth medium 3 by applying treatments such as heat treatment, physical recovery, and microorganism supplementation to collected used plant growth medium 3 with its SOIL value having been lowered, so as to make used plant growth medium 3 reusable.

Heat treatment is treatment in which plant growth medium 3 is heated to at least kill or diminish soil organisms. The soil organisms to be killed or diminished are at least microorganisms, living worms/insects, eggs thereof, and residual roots, and these are preferably incinerated.

Killing or diminishing microorganisms has an effect as a preliminary process to make plant growth medium 3 temporarily lose its biological properties and subsequently impart ideal biological properties through a later process. Killing or diminishing or incinerating living worms/insects and eggs thereof has an effect as worms/insects prevention treatment.

Killing, diminishing or incinerating residual roots has an effect as diseases prevention treatment. Recovery of physical properties may be achieved by adding base medium 1 of an amount equivalent to a decrease in plant growth medium 3 to plant growth medium 3.

The amount equivalent to the decrease is an amount equivalent to a decrease in volume of plant growth medium 3 which is due to residue adhering during transfer of the plant growth medium 3 and which is involved in deterioration caused by heat treatment, etc. Microorganism addition is a process in which microorganisms are added to plant growth medium 3 in order to restore the biological properties lost by heat treatment.

Restoration of biological properties is defined as imparting again biological properties comparable to those of unused plant growth medium 3. 'Unused' means that growth of plant 6 has never been carried out since it was produced as plant growth medium 3. Microorganisms may be added by coating dried plant growth medium 3 with powder containing microorganisms (microorganism powdering).

By returning plant growth medium 3 applied with the above-mentioned treatments to the user, the user can enjoy growing plant as many times as the user wants. In this manner, even individuals who do not have any special knowledge regarding soil can easily and repeatedly obtain soil that is rich in microorganisms in good balance and is suited to growing plants, enabling users to always use a soil which is ideal in terms of nutrients and cleanliness, in order to grow plants.

Although an embodiment of the present invention has been described above, the invention is not limited to the embodiment described above, and deformations or modifications, etc. to the extent that the objects of the present invention can be achieved are encompassed in the present invention.

For example, in the above description, microorganisms are contained in a capsule, but the form of microorganisms is not particularly limited so far as distribution is possible. Other than capsules, they may be contained in e.g., liquids, or they may be formulated in the form of tablets and the like. In other words, there is no problem, only if the kit for producing a plant growth medium to which the present invention is applied is provided with microorganisms in some methods, apart from the base medium containing organic matter.

In other words, it is sufficient only if the plant growth medium to which the invention is applied has the following configuration, so that the plant growth medium can take various embodiments.

The kit for producing a plant growth medium to which the invention is applied comprises: a base medium comprising organic matter (e.g. base medium 1 in Figure 1), and a microorganism (e.g. a microorganism in microorganism-containing capsule 2 in Figure 1, but not necessarily contained in microorganism-containing capsule 2); wherein the plant growth medium is produced by adding the microorganism to the base medium (e.g. plant growth medium 3 in Figure 1).

Here, the microorganism may be contained in a predetermined packaging container (e.g., the microorganism-containing capsule 2 of Figure 1).

In addition, the base medium and the microorganism may be provided so that the plant growth medium having an indicating value serving as an indicator of 'good soil' within a predetermined range can be produced.

Also, it is sufficient only if the method for producing a plant growth medium to which the invention is applied has the following configuration, so that the method can take various embodiments.

The method for producing a plant growth medium to which the present invention is applied may be configured to comprise: providing a kit for producing a plant growth medium comprising a base medium comprising organic matter and a microorganism, wherein a plant growth medium in an unused state is produced by adding the microorganism to the base medium.

Also, it is sufficient only if the method for recycling a plant growth medium to which the invention is applied has the following configuration, so that the method can take various embodiments.

The method for recycling a plant growth medium to which the present invention is applied comprises: conducting heat treatment by heating a used plant growth medium to at least kill or diminish a soil organism so as to extinguish biological properties, wherein the used plant growth medium is a medium resulting from use of a plant growth medium in an unused state produced by the method for producing a plant growth medium in order to grow a predetermined plant, compensating an amount equivalent to a decrease by adding the base medium to the plant growth medium, and restoring the plant growth medium to a plant growth medium in an unused state by recovering the biological properties lost by the heat treatment by adding a microorganism to the plant growth medium, so as to recycle the used plant growth medium.

### EXPLANATION OF REFERENCE NUMERALS

1 ... Base medium, 1a ... Zeolite (float stone), 1b ... Coconut peat, 2 ... Microorganism-containing capsule, 3 ... Plant growth medium, 4 ... Microorganism, 5 ... Organic substance (organic matter), 6 ... Plant, 7 ... Cover soil, 8 ... Plant growing container, 9 ... Used plant growth medium-collecting container 10 ... Soil recycling center

## Claims

1. A kit for producing a plant growth medium, comprising:
a base medium comprising organic matter and
a microorganism
wherein the plant growth medium is produced by adding the microorganism to the base medium.

2. The kit for producing a plant growth medium according to claim 1,
wherein the microorganism is contained in a predetermined packaging container.

3. The kit for producing a plant growth medium according to claim 1 or 2
wherein the base medium and the microorganism are provided so that a plant growth medium having an indicating value serving as an indicator of 'good soil' within a predetermined range can be produced.

4. A method for producing a plant growth medium, comprising:
providing a kit for producing a plant growth medium comprising
a base medium comprising organic matter and
a microorganism,
wherein a plant growth medium in an unused state is produced by adding the microorganism to the base medium.

5. A method for recycling a used plant growth medium, comprising the steps of:
conducting heat treatment by heating a used plant growth medium to at least kill or diminish a soil organism, so as to extinguish biological properties,
wherein the used plant growth medium is a medium resulting from use of a plant growth medium in an unused state produced by the method for producing a plant growth medium according to claim 4 in order to grow a predetermined plant,
compensating an amount of decrease by adding the base medium to the plant growth medium, and
restoring the plant growth medium to a plant growth medium in an unused state by recovering the biological properties lost by the heat treatment by adding a microorganism to the plant growth medium,
so as to recycle the used plant growth medium.
